# EUROPEAN PATENT APPLICATION

(11) **EP 1 014 642 A1**
(43) Date of publication of application: **28.06.2000**
(21) Application number: 99111674.0
(22) Date of filing: 16.06.1999
(51) Int. Cl.: H04L 29/06, G06F 1/00

(54) **System for securing an electronic data transfer**

(30) Priority: 22.12.1998 JP 36426098
(71) Applicant: MITSUBISHI DENKI KABUSHIKI KAISHA, Tokyo 100-8310 (JP)
(72) Inventor: Udagawa, Yoshihisa, Chiyoda-ku, Tokyo 100 (JP)
(74) Representative: Pfenning, Meinig & Partner

(57) **Abstract**

The present invention provides an information transferring system for confirming the client (10) which has requested the data transfer in the information networks (50) such as an internet. In the information transferring system including a client (10), an information network (50) and a data server (20), when the client (10) requests the data, the data server (20, 230) transmits an ID generating program to the client (10). The ID generating program, which is executed in the client (10, 140), generates the ID information of the client and transmits it to the data server (20). Then, the data server (20,80) analyzes the ID information received from the client (10) and transfers (240) the data to the client (10) when the client ID information meets the predetermined conditions.

## Description

### BACKGROUND OF THE INVENTION

### Field of the Invention

The present invention relates to a system for transferring a data (a file) stored in an Web server or an FTP server (hereinafter, referred to as a data server) connected to a network to a user computer (hereinafter, referred to as a client), specifically to an information transferring system for recording ID information to specify a client and allowing the accessed client to transfer the data based on the ID information. More particularly it relates to a technology for securing the safety and the reliability of the data transferred by electronic means.

### Description of the Prior Art

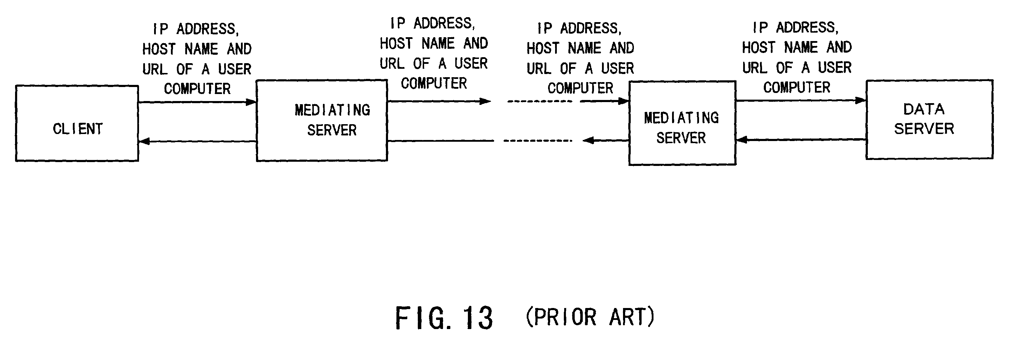

FIG. 13 shows a system configuration of a conventional information transferring system. Currently, data (a program file) stored in the data server is generally accessed via a wide area network typically represented by an internet. In the current internet, an IP address, a host name and a URL and so on of the client (a remote host) accessing the data server are transmitted to the data server. However, it is not guaranteed that the IP address, the host name and the URL and so on which are transmitted by the client surely reach the data server, since there are many mediating servers for relaying the data in the internet as shown in FIG. 13. Therefore, in the current internet there are no means for checking which and when the file has been transferred to which client. This is disclosed in "an easily available Perl script CGI & SSI library", published by Media Tech., 1998 and so on.

In the electronic commerce between the companies and between the company and the consumer represented by CALS (Continuous Acquisition and Lifecycle Support, or Commerce At Light Speed) and EC (Electronic Commerce), it is necessary to manage that who obtained which data, and when and from where the data have been obtained. However, the internet does not meet this request, so it has not been applied yet for the commerce using the electronic data.

Although the user is identified by an electronic certification station, it has not yet been applied for managing the rapid data transfer to many users because of its complicated mechanism.

In these several years, the computers have been connected to a wide area network (WAN) and a local area network (LAN) including the internet and have been transferring the data via the network. Since the wide area network including the internet has no means for confirming the ID information of the client who has requested the data (file), there is a problem that there is no means for confirming which file has been transferred to which client and when. This problem prevents the application of the electronic data to the electronic commerce, since it is strongly requested to manage the secure file transfer in the electronic commerce.

### SUMMARY OF THE INVENTION

It is an object of the present invention to provide an information transferring system which can confirm the client who has requested the data in information networks such as an internet.

According to one aspect of the invention, when the client requests the data, the data server transmits ID generating program to the client, the ID generating program is executed in the client to generate ID information for identifying the client and transmits it to the data server, and when the client ID information meets the predetermined conditions, the data server analyzes the ID information received from the client and transfers the data to the client.

Preferably, the data server owns a list table of clients which can transfer the data or which cannot transfer the data and judges whether the ID information received from the client meets the predetermined conditions based on the list table.

Preferably, the ID generating program transmits a MAC address, an IP address, a user name of the client and a client time to the data server.

Preferably, the ID generating program further transmits the ID information of the provider to the data server in case of the dial-up connection, and transmits the ID information of the proxy server to the data server in case of LAN connection.

Preferably, the ID generating program is erased after being executed.

Preferably, a set of ID generating programs are provided, and one of them is transmitted to the client after being sequentially or randomly chosen.

Preferably, the information transferring system encrypts the ID generating program transferred from the data server, the ID information transmitted from the client and transferring data, and also changes the encrypt key for each data transfer.

### BRIEF DESCRIPTION OF THE DRAWINGS

FIG. 1 shows a system configuration of an information transferring system of the present invention.
FIG. 2 shows a sequence of signals and data which are transmitted and received between a client and a data server.
FIG. 3 is a flowchart showing a process in the client.
FIG. 4 is a flowchart showing a process in a data server.
FIG. 5 is a flowchart showing a process in an ID analyzing server.
FIG. 6 shows an example of a table concerning the client.
FIG. 7 shows a flowchart for self-erasing the ID generating program.
FIG. 8 is a flowchart showing a detailed step S160 of FIG. 7.
FIG. 9 shows a system configuration when the data are transferred using the dial-up IP connection.
FIG. 10 shows a system configuration when the data are transferred via a local area network (LAN).
FIG. 11 is a flowchart showing a process to select one of the ID generating programs provided and transmit it to the client.
FIG. 12 shows an example of a client ID information which are generated as a result that the client has executed any one of the ID generating programs transmitted from the data server.
FIG. 13 shows a system configuration of a conventional information transferring system.

### DETAILED DESCRIPTION OF THE PREFERRED EMBODIMENTS

### Embodiment 1.

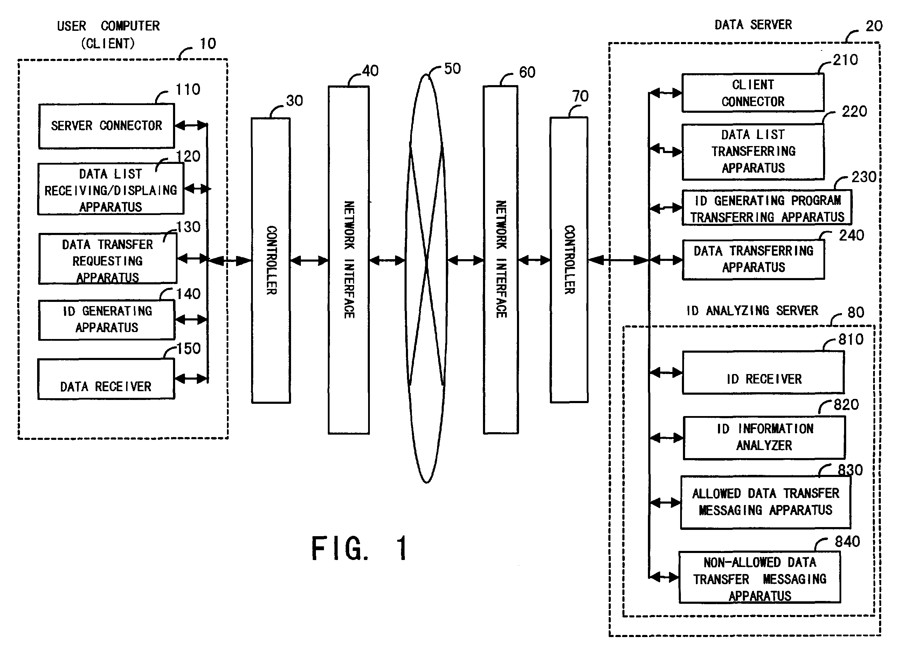

FIG. 1 shows a system configuration of the present invention. The information transferring system of FIG. 1 comprises a client 10 as a user computer having a function for requesting and downloading the data, a data server 20 for providing the data, a network 50 such as WAN and LAN for transferring the data between the client and the data server, controllers 30 and 70 for connecting the client with the network and network interfaces 40 and 60. In FIG. 1, the client 10 comprises an Web client, an FTP client or clients having similar functions as those of the Web client and the FTP client. Alternatively, the data server comprises an Web server, an FTP server having similar functions as those of the Web server and the FTP server.

The data server 20 is provided with an ID analyzing server 80 for analyzing the ID information received from the client 10. The ID analyzing server 80 judges whether the data can be transferred to the client.

The above client 10 is provided with a server connector 110 for connecting the client 10 with the data server 20, a data list receiving/ displaying apparatus 120 for receiving and displaying a data list from the data server 20 and making the user select necessary data from the list, a data transfer requesting apparatus 130 for requesting the data server 20 to transfer the data selected by the user, an ID generating apparatus 140 for generating various ID information regarding the client 10 by executing the ID generating program transmitted from the data server 20 and a data receiver 150 for receiving the data from the data server 20.

The data server 20 is provided with a client connector 210 to be connected with the client 10, a data list transferring apparatus 220 for transferring the data list to the client 10, an ID generating program transferring apparatus 230 for transferring the ID generating program to the client 10 to generate the ID information of the client in the client 10 and a data transferring apparatus 240 for transferring the data requested by the client 10.

The ID analyzing server 80 includes an ID receiver 810 for receiving the ID information from the client 10, an ID information analyzer 820 for analyzing the received ID information and judging whether the data can be transferred to the client 10, an allowed data transfer massaging apparatus 830 for transferring the message "the data transfer is allowed" to the data server 20 and a non-allowed data transfer massaging apparatus 840 for transferring the message "the data transfer is not allowed" to the data server 20.

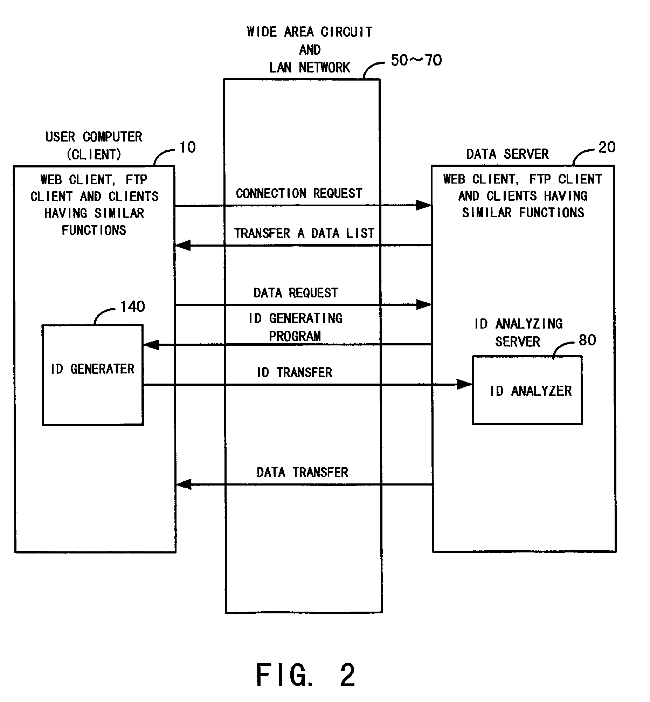

FIG. 2 shows a sequence of signals and data which are transmitted and received between the client 10 and the data server 20. In FIG. 2, the client 10 transmits a connection request signal to the data server 20. In response to the connection signal, the data server 20 transfers a data list to the client 10. The user selects necessary data from the data list and transmits a data request signal for requesting the selected data to the data server 20. The data server 20 transfers an ID generating program to the client 10. The client 10 executes the received ID generating program to generate the ID information concerning the client and transmits it to the data server 20. The data server 20 analyzes the ID information and judges whether the data can be transferred to the client 10 before transferring the data to the client 10.

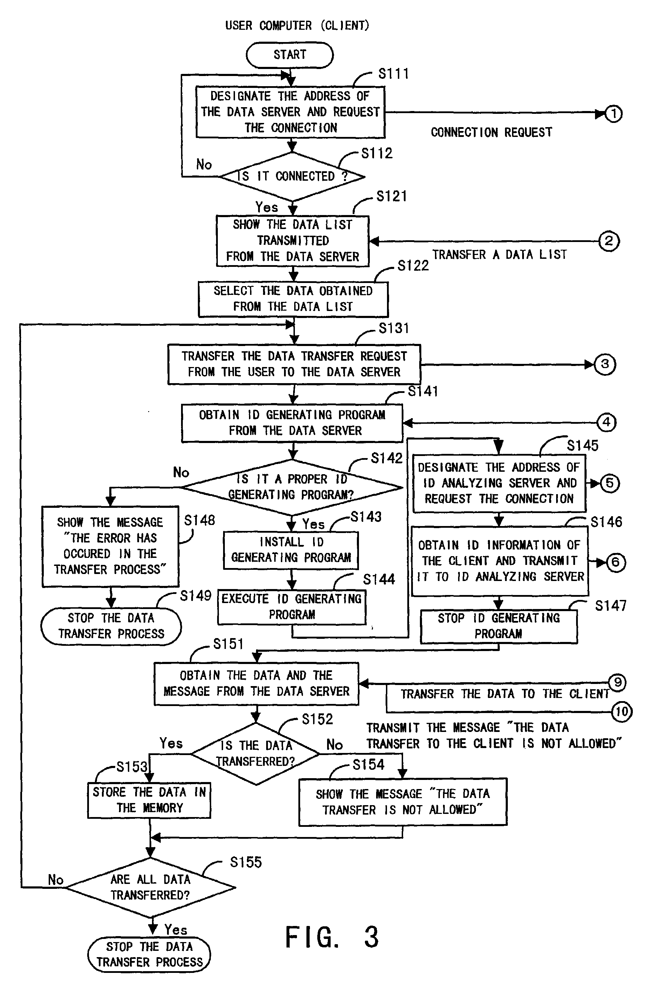

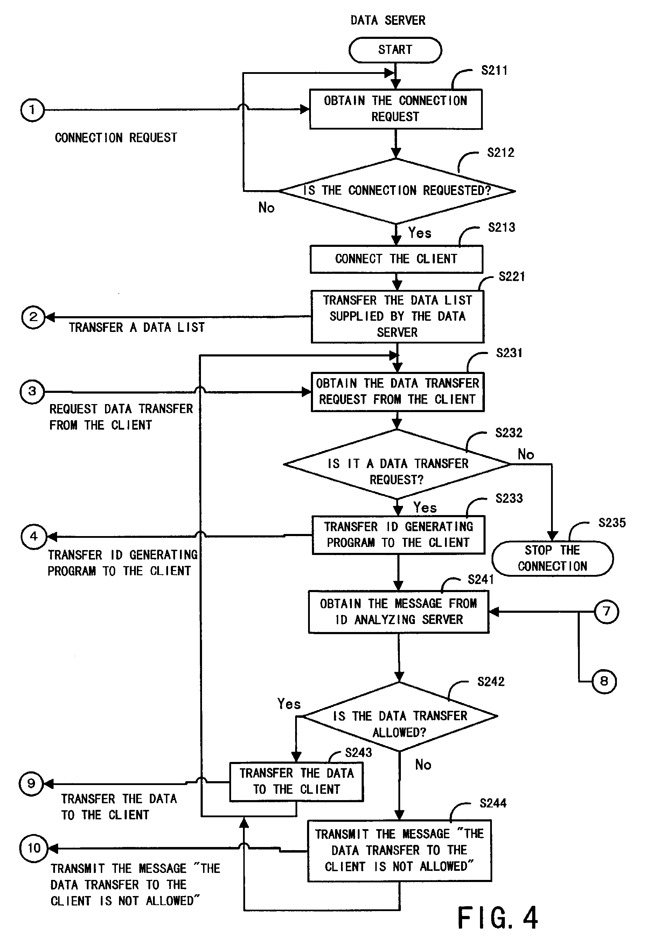

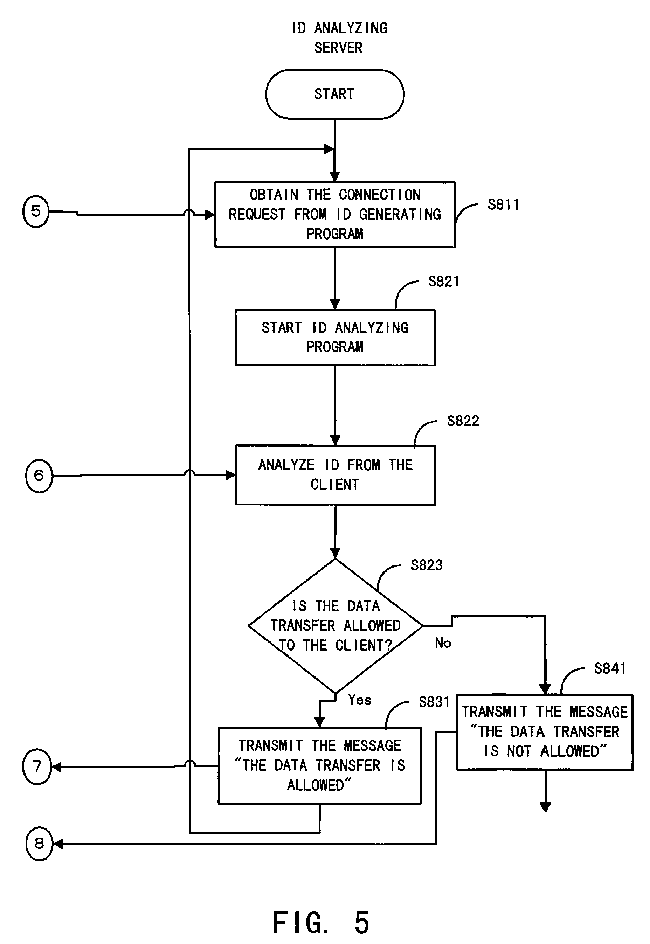

FIG. 3 is a flowchart showing a process in client 10. FIG. 4 is a flowchart showing a process in a data server 20. FIG. 5 is a flowchart showing a process in an ID analyzing server 80.

With reference to FIG. 1 and FIG. 3 - FIG. 5, the following (i) to (v) are explained.
(i) connection between the client and the data server,
(ii) transfer of the data list,
(iii) generation of ID information,
(iv) analysis of ID information, and
(v) data transfer in the information transferring system.

(i) connection between the client and the data server:
   The user starts to run the client software for managing the data transfer in the server connector 110 when it is necessary to obtain a file. After running the client software, the user designates the address of the data server 20. The server connector 110 transmits the connection signal to the data server 20 (step S111). The client connector 210 in the data server 20 receives the connection request signal from the client server 10, responses to the client 10 (steps S211, S212) and establishes the connection between the client 10 and the data server 20 (step S213).
(ii) transfer of the data list:
   After the data server 20 established the connection to the client 10, the data list transferring apparatus 220 transfers the data list including the data which the data server 20 can supply to the client 10 (step S221). The data list received from the data server 20 is shown on a display by the data list receiving/ displaying apparatus 120 in the client 10 (step S121). In the data transfer requesting apparatus 130, the user selects the necessary data from the data list shown on the display (step S122). The data transfer requesting apparatus 130 transmits the data requesting signal for requesting the selected data to the data server 20 (step S131).
(iii) generation of ID information:
   In the ID generating program transferring apparatus 230, the data server 20 obtains the request from the client 10 (step S231) and judges whether the request is a data transfer request (step S232). If the data request is the data transfer request, the ID generating program transferring apparatus 230 transfers the ID generating program to the client 10 (step S233), and if not, it stops the connection (step S235). The ID generating apparatus 140 receives the ID generating program from the data server 20 (step S141). When the ID generating apparatus 140 confirms that the program is a proper ID generating program and not a virus soft (step S142), it installs the ID generating program (step S143) and executes the installed ID generating program (step S144). The ID generating program designates the address of the ID analyzing server 80 and transmits the connection request signal for requesting the connection of the client 10 with the ID analyzing server 80 (step S145). Then, the ID generating program generates an ID information concerning the client 10 and transmits it to the ID analyzing server 80 (step S146) and stops the process (step S147).
(iv) analysis of ID information:
   The ID receiver 810 in the ID analyzing server 80 receives the connection request from the client 10 (step S811) and starts the ID analyzing program (step S821). Then, the ID information analyzer 820 in the ID analyzing server 80 analyzes the ID information from the client 10 (step S822). The ID information analyzer 820 in the ID analyzing server 80 judges whether the data requested by the client 10 can be transferred to the client 10 according to the result from the ID information analysis (step S823).
(v) data transfer:
   If the allowed data transfer massaging apparatus 830 in the ID analyzing server 80 judges that the data may be transferred to the client 10, it transmits the allowed data transfer message "the data transfer is allowed" to the data server 20 (step S831). On the other hand, the non-allowed data transfer massaging apparatus 840 judges the data may not be transferred to the client 10, it transmits the non-allowed data transfer message "the data transfer is not allowed" to the data server 20 (step S841). The data transferring apparatus 240 in the data server 20 judges which message is received (step S242) when it receives the allowed data transfer message or non-allowed data transfer message from the ID analyzing server 80 (step S241). If it is the allowed data transfer message "the data transfer is allowed", the data server 20 transmits it to the client 10 (step S243). If it is the non-allowed data transfer message "the data transfer is not allowed", it transmits the message to the client 10 (step S244).

The data receiver 150 in the client 10 receives the data from the data server 20 or the message that the data transfer is not allowed (step S151). When the data is received at the data receiver 150 (step S152), the client 10 stores the data in the memory (step S153). When the data is not received at the data receiver 150 (step S152), the client 10 shows the message "the data transfer is not allowed" on the display (step S154). The data receiver 150 in the client 10 judges whether all data are transferred (step S155). If the all data are transferred, it stops the data transfer process. If parts of data are not yet transferred, the steps S131 - S155 are repeated.

The client ID information includes a MAC (Media Access Control) address for identifying the machine, an IP address of the client, an IP address of the private server (Proxy server), an OS name, a user name, time and so on. Since the MAC address is an inherent number for the LAN card of each client, the client can be identified uniquely, using the MAC address as the ID information. Further, since the IP address of the client is a number given uniquely to each internet user, the client can be identified uniquely, using the IP address as the ID information.

When the client is connected to the network via dial-up connection, the client can be specified uniquely, by including an IP address of the computer of the provider in the ID information. When the client is connected to the network via the LAN, the client can be specified uniquely, by including the IP address of the private server in the ID information. At the same time, the client can be specified more precisely, by including the user name of the internet in the ID information.

Taking the computer time of the client as the ID information, it can be confirmed that the user has deceived the time to request the data. Therefore, the time information can be an effective ID information.

The ID server 80 analyzes the ID information to judge whether the data transfer can be allowed. For example, the clients to which the data transfer is allowed and the clients to which the data transfer is not allowed are in advance registered and stored in a table. The ID server 80 compares the ID information received from the client 10 with the clients stored in the table to determine the clients to which the data transfer is allowed and the clients to which the data transfer is not allowed.

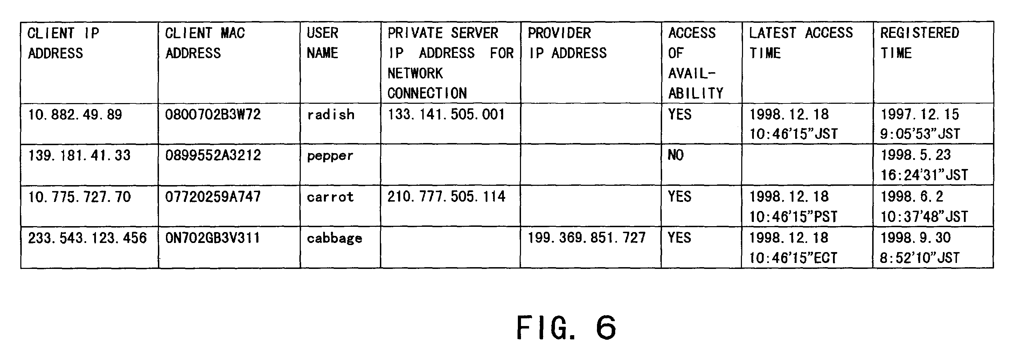

FIG. 6 shows an example of a table concerning the client. In FIG. 6, the table comprises, for example, a client IP address, a client MAC address, a user name, a private server IP address for the network connection, a provider IP address, an access availability, a latest access time and a registered time. Among the above, the client IP address, the client MAC address and the user name are always designated for each client.

The private server IP address for network connection is designated only when the client is connected via a LAN. The provider IP address is designated only when the client is connected via dial-up IP. The access availability and the registered time are items to be set beforehand by the administrator of the data server 20. In the item of the latest access time, the latest time when the client has accessed the data server 20 is stored. In the item of the registered time, a time when the administrator sets the table contents is stored.

The client MAC address, the user name, the private server IP address for the network connection and the provider IP address are extracted from the client ID information, and are compared with the table of FIG. 6, then whether the data transfer is allowed to the client or not can be instantly judged from the IP access availability item.

### Embodiment 2.

In the information transferring system of the second embodiment of the present invention, the ID generating program received from the data server can avoid the risk from modifying by self-erasing after the execution of the program.

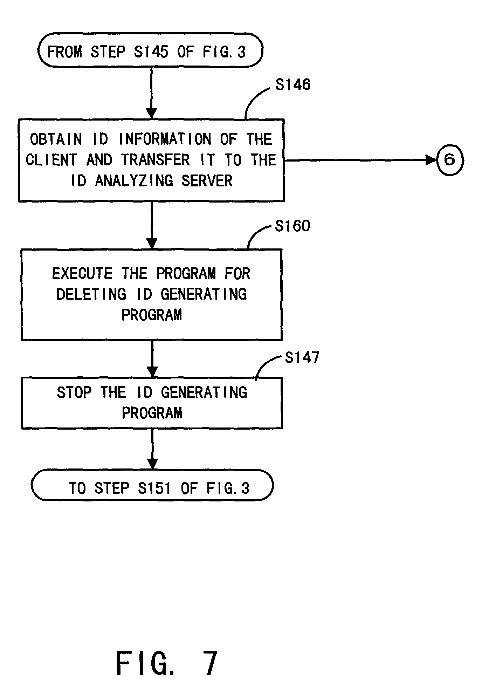

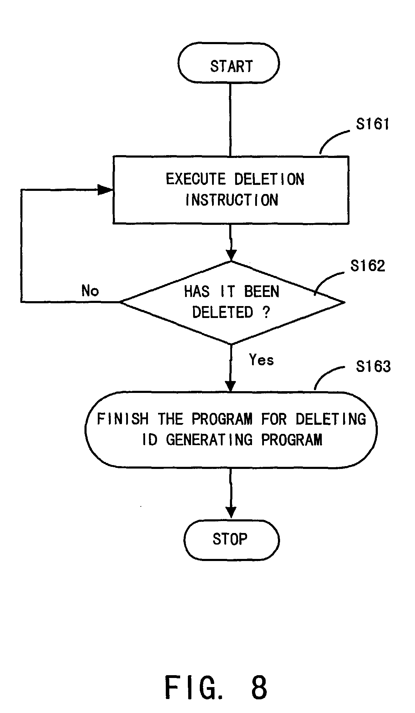

FIG. 7 shows a flowchart for self-erasing the ID generating program. In the second embodiment, a step S160 is inserted between the step S146 and the step S147 in FIG. 3. FIG. 8 is a flowchart showing the detailed step S160 of FIG. 7.

In FIG. 7, the ID generating program generates the ID information concerning the client 10 and transmits it to the ID analyzing server 80 (step S146), then it executes the program for deleting the ID generating program (step S160). In order to realize the step S160 for deleting the ID generating program, there is a method for storing the executable program for deleting the ID generating program as a binary code within the ID generating program. After transmitting the ID information to the data server 20, the ID generating program down-loads the binary code to a file, which contains the program to delete the ID generating program, and executes the file.

A program for deleting the ID generating program is explained below. In FIG. 8, at first, a file deletion instruction (step S161) is executed, then, it is judged whether the ID generating program has been deleted (step S162). Upon deleting the ID generating program, the program stops (step S163). On the other hand, if the ID generating program has not yet been deleted, the steps S161 and S162 are repeated until the deletion instruction has been executed.

In the OS including Windows and UNIX, the file which stores the program under execution cannot be deleted until the execution thereof finishes. Therefore, the execution of the file deletion instruction (step S161) is not allowed until the execution of the ID generating program finishes (step S147) and the steps S161 and S162 are repeated. Immediately after the execution of the ID generating program is finished (step S147), the file of the ID generating program is deleted (step S161) and the execution of the program for deleting the ID generating program finishes (S163).

In this way, the deletion of the file of the ID generating program makes the client disk area minimum and prevents the ID generating program from altering.

### Embodiment 3.

In the information transferring system of the third embodiment of the present invention, an additional ID information is supplied to the data server in case of the dial-up connection and the LAN connection. In case of the dial-up connection, the ID generating program in the client 10 transmits the ID information of the provider to the data server in addition to the above ID information. In case of the LAN connection, the ID generating program transmits the ID information of the proxy server to the data server to identify the computer which has accessed the data.

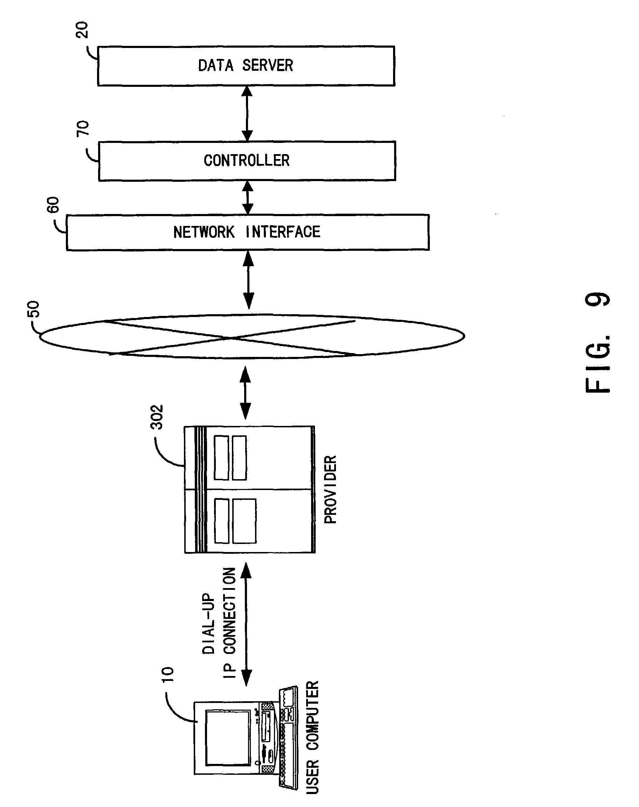

FIG. 9 shows a system configuration when the data are transferred using the dial-up IP connection. As shown in FIG. 9, the client in the homes or in the small offices generally accesses to the wide area network via a network connection corporation called a provider 302. In this case, only a provider's computer can be detected via the wide area network and the ID information concerning the client 10 in the homes or the small offices which has requested the data cannot be detected via the wide area network. Accordingly, when the client is connected using dial-up connection, the ID information of the provider's computer is required in order to identify the client 10 which is accessing the data. Since the ID information (IP address) of the provider's computer to which the client is connected is stored in the client 10, the ID generating program can detect the ID information of the provider's computer which is connected with the client 10 and transmit it to the data server 20 together with the client's ID information.

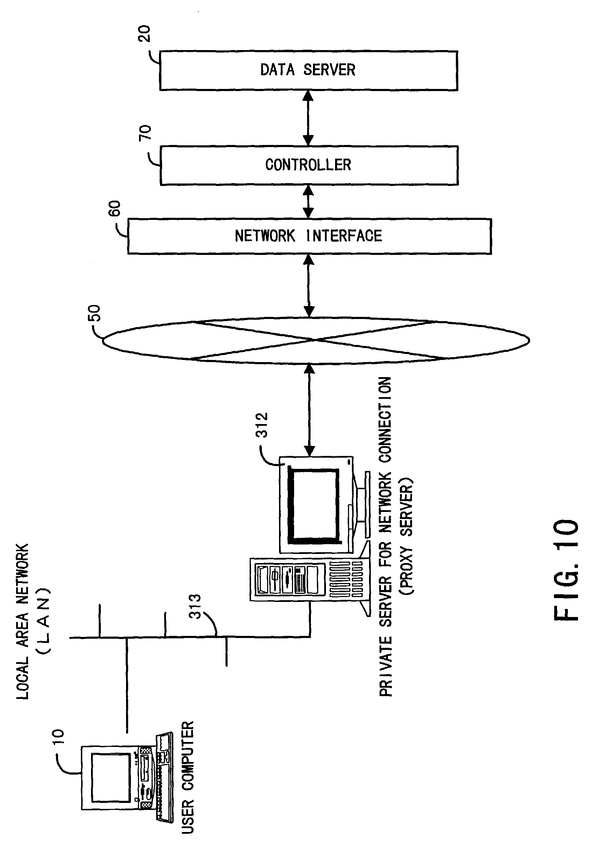

FIG. 10 shows a system configuration when the data are transferred via the local area network (LAN) 313. In FIG. 10, the connection from the LAN to the wide area network is realized via the private server 312 (Proxy server). In this case, only the ID information (IP address) of the private server 312 can be detected via the wide area network and the ID information of the client which have requested the data transfer cannot be detected via the wide area network. Therefore, in the LAN connection, the ID information of the private server is necessary to identify the computer which have requested the data transfer. Since the ID information of the private server 312 is stored in the client 10, the ID generating program detects the ID information of the private server connected to the client 10 and transmits it to the data server 20 together with the client's ID information.

### Embodiment 4.

In an information transferring system of a fourth embodiment of the present invention, a set of the ID generating programs are provided in the data server 20. These plurality of the ID generating programs are selected sequentially or randomly and transmitted to the client 10. Accordingly, the ID generating program once installed in the client 10 cannot be used again, which prevent the risk for altering the client's ID information from the user.

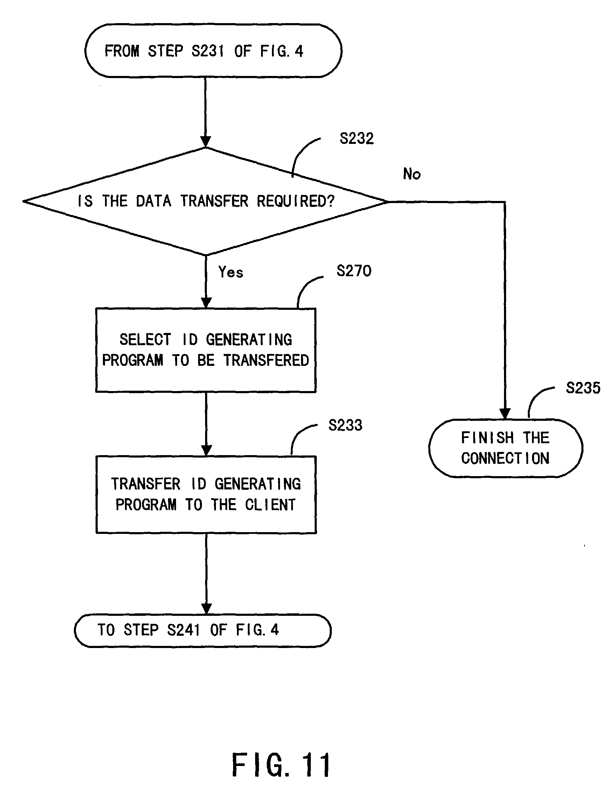

FIG. 11 is a flowchart for selecting one of a plurality of the ID generating programs and transmitting it to the client. In FIG. 11, a step S270 is inserted between the step S232 and the step S233 in FIG. 4. In step 232, when the data transfer is required, the process goes to the step 270. In step S270, one program is selected from a set of the ID generating programs. In step S270, it is determined which program is transferred among a plurality of ID generating programs. In order to realize the above process, the random numbers are generated and divided by the numbers of the prepared ID generating programs to get the remainder. Thus, one of the ID generating programs is decided.

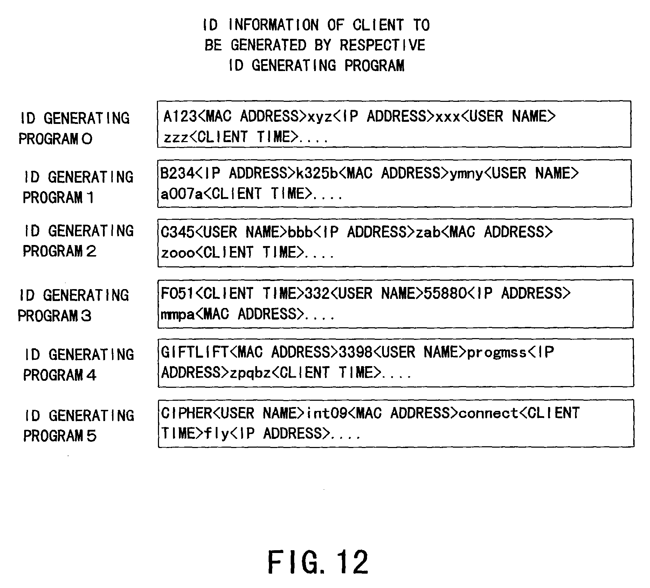

FIG. 12 shows an example of the client ID information generated at the client by executing any one of the ID generating program transmitted from the data server 20. As shown in FIG. 12, any client ID information includes the MAC address, the IP address and the user name to identify the client. The client ID information however can have various combinations by changing the appearance order of these information and character strings.

For example, in the ID generating program 0, the client ID information is comprised of the sequence of the MAC address, the IP address, the user name and the client time. While, in the ID generating program 1, the client ID information is comprised of the sequence of the IP address, the MAC address, the user name and the client time. In the ID generating programs 2 - 5, the sequences of the client ID information are changed as well. Since the data server knows the sequence of the ID information generated by the client which has been transmitted from the data server, the data server can authenticate that the client ID information returned from the client is surely the ID information generated by the ID generating program which is transmitted from the data server to the client.

In this way, by selecting and transmitting the selected ID generating program from the data server to the client, the data server can confirm that the ID generating programs transferred from the data server 20 are executed in the client 10. In this way, the altering of the ID generating program at the client can be prevented.

### Embodiment 5.

In a information transferring system of a fifth embodiment of the present invention, "the ID generating program", "the ID information" and "the data" transmitted between the data server 20 and the client are encrypted, and the encrypt key is changed for each data transfer, so that the data leakage to the third party can be prevented. Thus, the reading of "the ID generating program", "the ID information" and "the data" becomes rather difficult, and "the fact of transferring the data" can be concealed according to the information transferring system of the present invention, thereby the security of the data transfer can be secured and the data leakage to the third party can be prevented.

## Claims

1. An information transferring system comprising a client for requesting information, information networks such as a wide area network and a local area network and a data server for providing data:
said data server (20,230) transmits ID generating program to the client (10) when the client requests the data,
said ID generating program is executed in the client (10) to generate ID information for identifying the client and transmits it to the data server (20,80),
said data server (20,80) analyzes the ID information received from the client and transfers (240) the data to the client (10) when the client ID information meets the predetermined conditions.

2. The information transferring system of claim 1, wherein said data server (20) owns a list table of clients which can transfer the data or which can not transfer the data and judges whether the received ID information of the client meets the predetermined conditions based on the list table.

3. The information transferring system of claim 1, wherein said ID generating program transmits a MAC address, an IP address and a user name of the client and a client time to the data server (20).

4. The information transferring system of claim 3, wherein said ID generating program transmits the ID information of the provider (302) to the data server (20) in case of the dial-up connection and transmits the ID information of the proxy server (312) to the data server (20) in case of LAN connection.

5. The information transferring system of claim 1, wherein said ID generating program is erased after being executed.

6. The information transferring system of claim 1, wherein said ID generating program is comprised of a set of ID generating programs and said one of them is transmitted to the client after being sequentially or randomly chosen.

7. The information transferring system of claim 1, the information transferring system encrypts the ID generating program transferred from the data server (20), the ID information transmitted from the client and the transferring data, and also changes the encrypt key for each data transfer.
